Europäisches Patentamt

European Patent Office

Office européen des brevets

(11) Veröffentlichungsnummer: **0 233 994**
**A1**

## (12) EUROPÄISCHE PATENTANMELDUNG

(21) Anmeldenummer: **86114365.9**

(22) Anmeldetag: **16.10.86**

(51) Int. Cl.⁴: **G01N 5/04**

(30) Priorität: **30.01.86 DE 3602815**

(43) Veröffentlichungstag der Anmeldung:
**02.09.87 Patentblatt 87/36**

(84) Benannte Vertragsstaaten:
**DE ES FR GB IT**

(71) Anmelder: **Brückner Trockentechnik GmbH & Co. KG**
**Benzstrasse 8-10**
**D-7250 Leonberg(DE)**

(72) Erfinder: **Gresens, Harry**
**Max-Eyth-Strasse 33**
**D-7141 Benningen/Neckar(DE)**

(74) Vertreter: **Tetzner, Volkmar, Dr.-Ing. Dr. Jur.**
**Van-Gogh-Strasse 3**
**D-8000 München 71(DE)**

(54) Vorrichtung zur Ermittlung des zeitlichen Trocknungsverlaufes einer Warenprobe.

(57) Die Erfindung betrifft eine Vorrichtung zur Ermittlung des zeitlichen Trocknungsverlaufes einer feuchten Warenprobe. Hierbei ist die Warenprobe (2) während des Trocknungsvorganges ständig mit dem beweglichen Teil (6) der Waage verbunden, wobei die Zuführung des Trocknungsluftstromes (14) im Takt der Wägung unterbrochen werden kann. Eine derartige Vorrichtung ermöglicht eine automatische Ermittlung der Trocknungsverlaufkurve.

FIG 2

EP 0 233 994 A1

## Vorrichtung zur Ermittlung des zeitlichen Trocknungsverlaufes einer Warenprobe

Die Erfindung betrifft eine Vorrichtung - (entsprechend dem Oberbegriff des Anspruch 1) zur Ermittlung des zeitlichen Trocknungsverlaufes einer feuchten Warenprobe.

In der Trocknungstechnik sind die Trocknungseigenschaften der zu trocknenden Güter im allgemeinen eine unbekannte Größe. So gehen bei der Trocknung von Textilien außerordentlich viele Parameter in die Trocknungseigenschaften ein, so daß eine exakte Vorhersage der Trocknungseigenschaften nur nach ausgiebigen Vorversuchen möglich ist. Derartige Vorversuche sind jedoch sehr arbeitsaufwendig und demgemäß recht kostspielig.

Es ist aus der Praxis bekannt, den zeitlichen Trocknungsverlauf einer feuchten Warenprobe in der Weise näherungsweise zu ermitteln, daß die Warenprobe in einer Versuchseinrichtung getrocknet und dabei während des Trocknungsvorganges wiederholt der Versuchseinrichtung entnommen und gewogen wird. Ein solches Verfahren ist jedoch recht umständlich und zeitaufwendig; die hierbei erzielbare Genauigkeit ist darüber hinaus sehr begrenzt.

Der Erfindung liegt daher die Aufgabe zugrunde, unter Vermeidung dieser Mängel eine Vorrichtung der im Oberbegriff des Anspruches 1 vorausgesetzten Art so auszubilden, daß der zeitliche Trocknungsverlauf der feuchten Warenprobe auf besonders einfache Weise ermittelt wird, wobei insbesondere die Möglichkeit einer Automatisierung besteht.

Diese Aufgabe wird erfindungsgemäß durch die kennzeichnenden Merkmale des Anspruches 1 gelöst.

Zweckmäßige Ausgestaltungen der Erfindung sind Gegenstand der Unteransprüche.

Bei der erfindungsgemäßen Vorrichtung bleibt die Warenprobe während des gesamten Trocknungsvorganges in der Trocknungseinrichtung. Um hierbei eine vorzugsweise wiederholte Wägung der Warenprobe während des Trocknungsvorganges durchführen zu können, ist die Halterungseinrichtung, die die Warenprobe aufnimmt, mit dem beweglichen Teil der Waage verbunden.

Da die Warenprobe durch den vom Düsensystem zugeführten Trocknungsluftstrom gewissen Kräften ausgesetzt ist, wird die Zuführung dieses Luftstromes im Takt der Wägung durch ein steuerbares Ventil unterbrochen. Auf diese Weise kann die in der Trocknungsvorrichtung befindliche Warenprobe bei periodischer, -kurzer Unterbrechung des Trocknungsluftstromes exakt gemessen und auf diese Weise der zeitliche Trocknungsverlauf genau bestimmt werden.

Die Erfindung sei anhand der Zeichnung näher ererläutert. Es zeigen

Fig. 1 eine schematische Stirnansicht der erfindungsgemäßen Vorrichtung mit ihren Hauptteilen;

Fig. 2 einen Schnitt längs der Linie II-II in Fig. 1

Fig. 3 eine Aufsicht auf den Nadelring;

Fig. 4 eine Schemadarstellung der Einrichtung zur Erzeugung des Trocknungsluftstromes;

Fig. 5 ein Diagramm des zeitlichen Trocknungsverlaufes einer Warenprobe;

Fig. 6 eine vereinfachte Vorderansicht der zusammengebauten Vorrichtung mit auf-und abbewegbaren Düsen;

Fig. 7 eine teilweise Seitenansicht etwa entlang der Linie VII-VII in Fig. 6.

Die erfindungsgemäße Vorrichtung zur Ermittlung des zeitlichen Trocknungsverlaufes einer feuchten Warenprobe enthält ein Düsensystem 1 zur Zuführung eines Trocknungsluftstromes definierter Temperatur, Strömungsmenge und Feuchte zu einer kreisförmigen feuchten Warenprobe 2, die von einer durch einen Nadelring 3 gebildeten Halterungseinrichtung getragen wird.

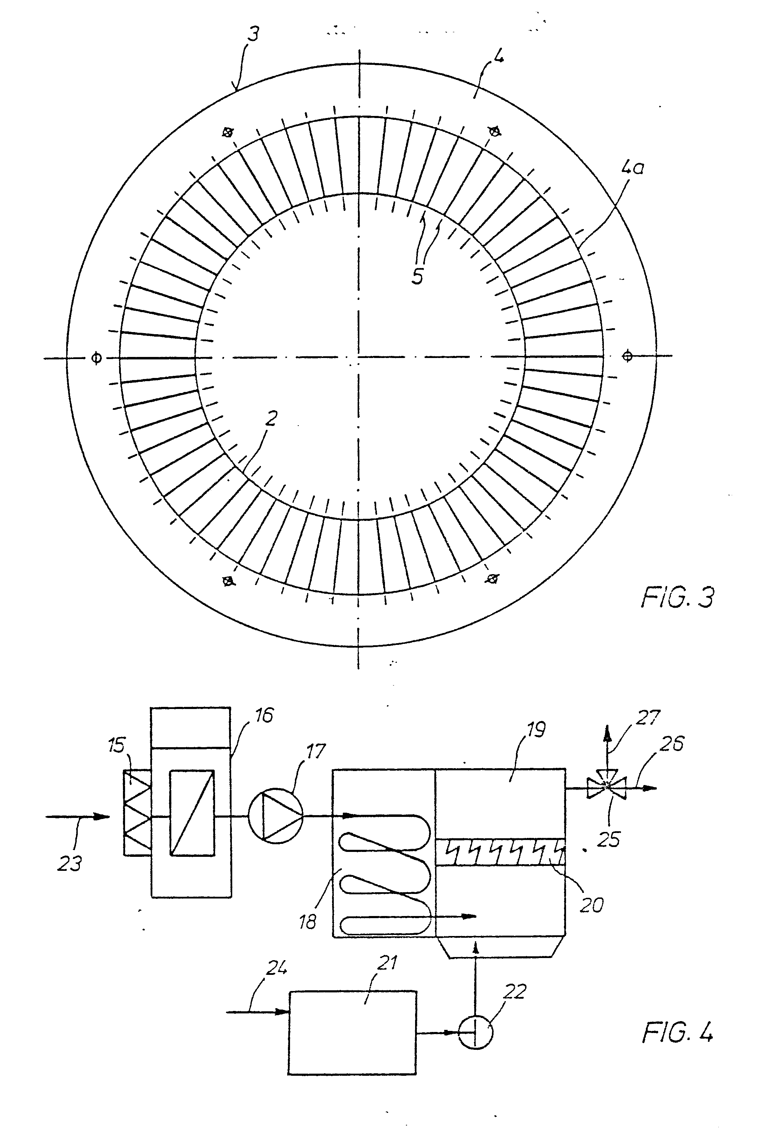

Der Nadelring 3 besteht -wie insbesondere Fig. 3 zeigt -aus einem ringförmigen Nadelträger 4 und einer Anzahl von Nadeln 5, die vom Innenrand 4a des Nadelträgers 4 in radialer Richtung nach innen gerichtet sind und in einer nach oben weisenden Spit ze 5a ausmünden.

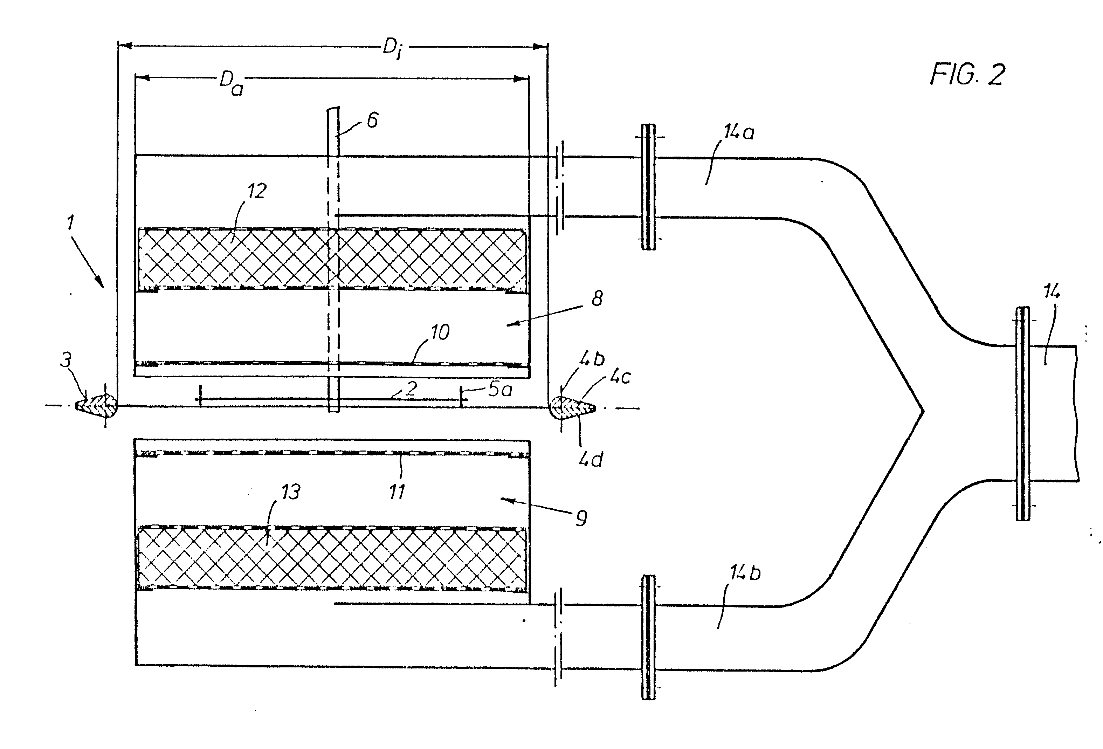

Der Querschnitt des Nadelträgers 4 ist stromlinienförmig gestaltet (vgl. Fig.2), wobei das verjüngte Ende nach außen weist. Der Nadelträger 4 besteht dabei aus zwei durch Schrauben 4b verbundenen Teilen 4c und 4d, zwischen denen die Nadeln 5 festgeklemmt sind.

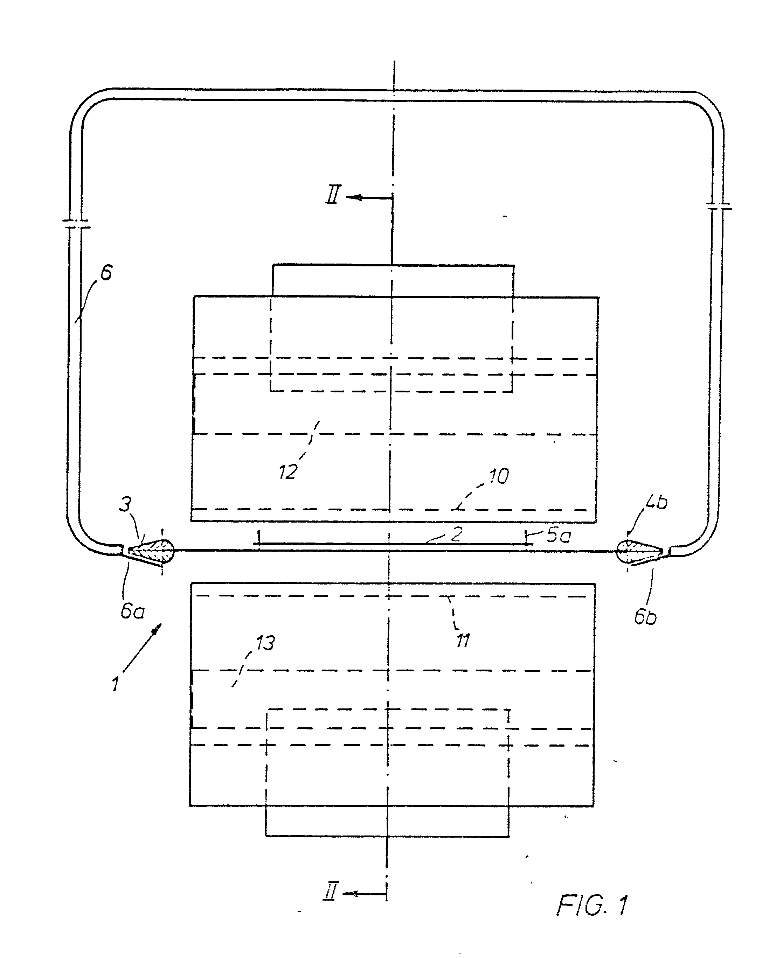

Der Nadelring 3 stützt sich auf den Enden 6a, 6b eines mehrarmigen Bügels 6 ab (vgl. Fig.1), der den beweglichen Teil einer elektronischen Waage bildet. Dieser Bügel 6 kann in Umfangsrichtung verteilt beispielsweise 2 oder 3 Stützarme aufweisen.

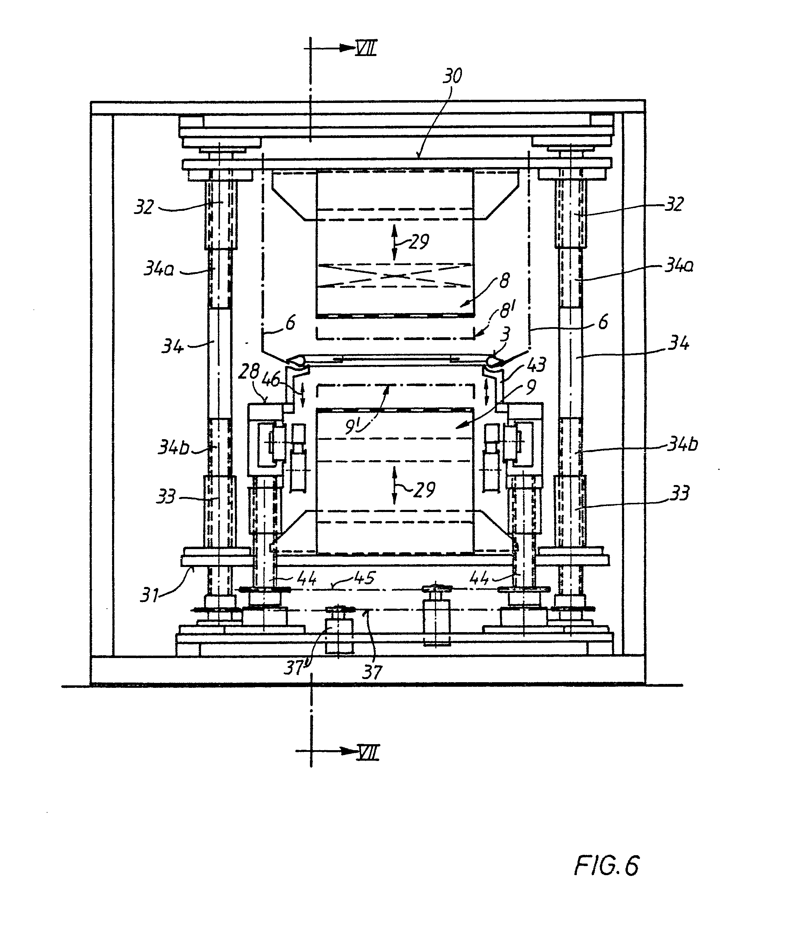

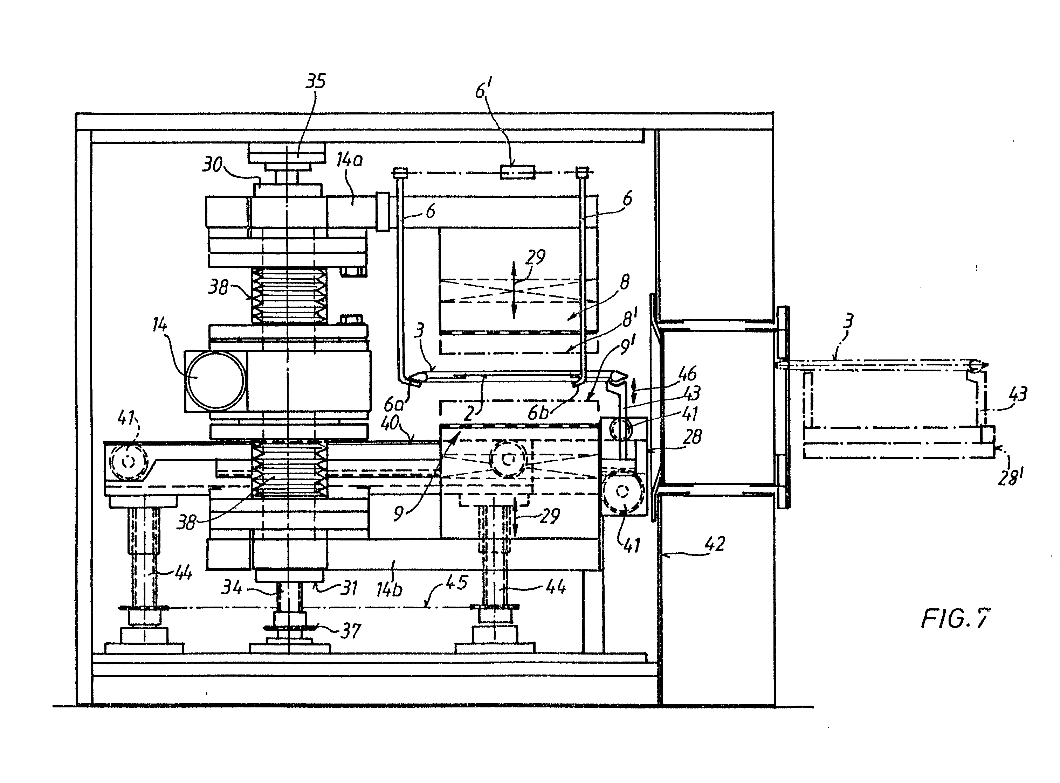

Mittels einer, anhand der Fig. 6 und 7 näher erläuterten Schublade 28 kann der Nadelring 3 in das Düsensystem 1 eingeschoben und auf dem mehrarmigen Bügel 6 abgelegt werden.

In der in den Fig. 1 und 2 dargestellten Lage befindet sich der Nadelring 3 mit der Warenprobe 2 in symmetrischer Anordnung zwischen Oberdüsen 8 und Unterdüsen 9 des Düsensystems 1. Die Ober-und Unterdüsen 8, 9 enthalten je eine kreisförmige Lochscheibe 10 bzw. 11 und ein vorgeschaltetes Element 12 bzw. 13 von kreisförmigem Querschnitt zur Vergleichmäßigung der Luftströmung über den gesamten Querschnitt.

Wie Fig. 2 erkennen läßt, ist der Innendurchmesser $D_i$ des Nadelringes 3 größer als der Außendurchmesser $D_a$ des Düsensystems 1. Der Nadelträger 4 des Nadelringes 3 befindet sich infolgedessen genügend weit außerhalb des Randes der Warenprobe 2 und beeinträchtigt daher die gleichmäßige Anströmung der Ober-und Unterseite der Warenprobe 2 durch den Trocknungsluftstrom.

Der Trocknungsluftstrom wird dem Düsensystem 1 über eine Rohrleitung 14 zugeführt, die über je eine Teilleitung 14a, 14b mit den Oberdüsen 8 und den Unterdüsen 9 verbunden ist.

Fig. 4 veranschaulicht ganz schematisch die wesentlichen Teile einer bevorzugten Einrichtung zur Erzeugung des Trocknungsluftstromes definierter Temperatur, Strömungsmenge und Feuchte.

Sie enthält einen Frischluftansaugfilter 15, eine vorzugsweise als Druckluft-Kältetrockner ausgebildete Einrichtung 16 zur vollständigen Trocknung der angesaugten Luft, ein Gebläse 17 - (beispielsweise ein Seitenkanalgebläse), einen Wärmetauscher 18 (beispielsweise einen thermalölbeheizten Rohr-Wärmetauscher), eine Befeuchtungskammer 19 mit Tropfenfänger 20 sowie einen Dampferzeuger 21, der über ein Dampfmengenregelventil 22 an die Befeuchtungskammer 19 angeschlossen ist.

Die angesaugte Luft ist mit dem Pfeil 23 bezeichnet, das dem Dampferzeuger 21 zugeführte Wasser mit dem Pfeil 24.

Trocknungsluft einer definierten Temperatur, Strömungsmenge und Feuchte wird über ein steuerbares Ventil 25 (beispielsweise ein Dreiwegeventil) in der einen Schaltstellung dieses Ventils dem Düsensystem 1 zugeleitet (Pfeil 26 in Fig.4). In der anderen Schaltstellung des Ventils 25 ist die Luftzufuhr zum Düsensystem 1 unterbrochen; die Luft wird in diesem Falle über das Ventil 25 abgeleitet (Pfeil 27).

Die Funktion der bisher beschriebenen erfindungsgemäßen Vorrichtung ist folgendermaßen:

Die im Düsensystem 1 angeordnete feuchte Warenprobe 2 wird mittels des genau konditionierten Trocknungsluftstromes getrocknet und dabei periodisch gewogen. Zum Zwecke der Wägung wird die Zuführung des Luftstromes durch das steuerbare Ventil 25 im Takt der Wägung jeweils unterbrochen.

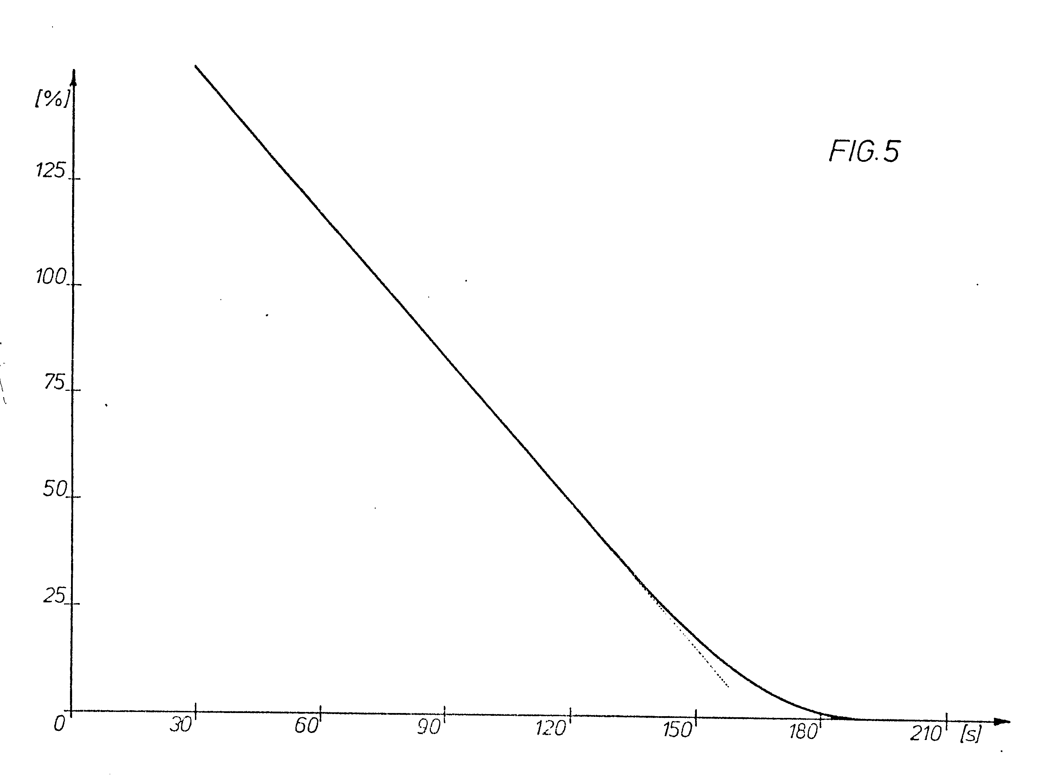

Eine elektronische Waage liefert ein analoges oder digitales Wägesignal des Probengewichtes. Dieses Signal wird von einem die Anlage führenden (und damit auch die periodische Umschaltung des Ventiles 25 steuernden) Rechner in beliebigen Taktzeiten abgefragt und gespeichert. Wenn am Ende des Trocknungsvorganges der Meßwert stehenbleibt, wird der Meßvorgang abgebrochen. Der Rechner liefert dann ein Diagramm des zeitlichen Trocknungsverlaufes, wie es in Fig.5 beispielsweise veranschaulicht ist.

In der Ordinate ist der Feuchtegehalt der Probe (in Gew.-%) und in der Abszisse die Trocknungszeit (in s) aufgetragen.

Bei dem Trocknungsbeispiel gemäß Fig.5 betrug die Trocknungszeit 89,5 s für die Trocknung von 100% auf 8%. Der Düsendruck betrug hierbei 550 Pa, die Lufttemperatur 20°C, die Wiegezeit (insgesamt) 3 s.

Mittels geeigneter Rechnerprogramme kann von einem Trocknungsverlauf gemäß Fig.5 (unter Zugrundelegung der in der Versuchseinrichtung vorhandenen Düsengeometrie und der sonstigen Parameter des Wärme-und Stoffaustausches) auf die Trocknungsbedingungen in einer realen Spannmaschine geschlossen werden. Im einfachsten Fall wird die Versuchseinrichtung, die die Temperaturverlaufskurve ermittelt, so eingestellt, daß der Wärmeübergangskoeffizient dem der realen Maschine entspricht, und es werden weiterhin auch die physikalischen Trocknungsbedingungen - (Lufttemperatur und Luftfeuchte) der originalen Trocknersituation angepaßt. In diesem Falle kann man aus der ermittelten Trocknungsverlaufskurve direkt auf die zu erwartenden Trocknungsbedingungen im realen Trockner schließen.

Kann man dagegen in der Versuchseinrichtung den Wärmeübergangskoeffizienten und/oder die physikalischen Randbedingungen des Trocknungsvorganges im realen Trockner nicht nachbilden, so sind noch verschiedene Analogierechnungen notwendig, um von der in der Versuchseinrichtung ermittelten Trocknungsverlaufskurve gemäß Fig.5 auf die in der realen Spannmaschine zu erwartende Trocknungsgeschwindigkeit zu schließen. Auf diese mittels Rechner durchzuführenden Umrechnungen soll im vorliegenden Zusammenhang nicht näher eingegangen werden.

Mit der erfindungsgemäßen Vorrichtung können automatisiert Trocknungsverlaufskurven beliebiger Materialien (zwischen 30 und 3000 g/m²) bei unterschiedlichen Temperaturen, unterschiedlichen Luftgeschwindigkeiten in den Düsen und unterschiedlichen Luftfeuchtigkeiten ermittelt werden. Die Düsen können hierbei so gestaltet werden, daß Wärmeübergangskoeffizienten bis zu 200 W/m² erzeugt werden können.

Die absolute Symmetrie der Zu-und Abluftführungen gewährleistet eine saubere, nahezu laminare Abströmung der Luft.

Das steuerbare Ventil 25 wird dabei so ausgebildet, daß die Absperrung und Wiedereinschaltung des Luftstromes (im Takte der Wägung) praktisch stoßfrei erfolgt.

Die Lufttemperatur, die Luftfeuchte und der Düsendruck werden mit geeigneten Meßelementen erfaßt und mit selbstadaptierenden Reglern konstantgehalten.

Während bei der vorhergehenden Beschreibung des Ausführungsbeispieles und dessen Funktion davon ausgegangen worden ist, daß die verwendete Waage zur wiederholten Wägung der Warenprobe während des Trocknungsvorganges ausgeführt ist, besteht aber auch die Möglichkeit, diese Waage zur kontinuierlichen Wägung der Warenprobe während des Trocknungsvorganges auszuführen.

In diesem Zusammenhang sei vorausgeschickt, daß das Ventil zur Unterbrechung des Luftstromes zum Zeitpunkt der Wägung nur dann benutzt werden kann, wenn die Trocknung der Warenprobe eine Unterbrechung des Luftstromes zuläßt. Verläuft dagegen die Trocknung kurzfristig (z. B. innerhalb von 1 -3 s), dann dauert die Schaltzeit in diesem Falle zu lange, um ausreichende Anzahl von Wägungen zu gewinnen, aus denen man dann eine Trocknungsverlaufskurve ableiten könnte. Für solche sehr schnell trocknenden Warenproben ist es daher vorteilhaft, das Meßsignal der Waage als Analogsignal kontinuierlich zu erfassen (bei entsprechender Ausführung der Waage für eine kontinuierlicheWägung ), und es später mit mathematischen Methoden vom Signalrauschen zu befreien. Über dieses Analogsignal kann ebenfalls eine Trocknungsverlaufskurve aufgezeichnet werden.

Bei der oben beschriebenen bevorzugten Einrichtung zur Erzeugung des Trocknungsluftstromes definierter Temperatur, Strömungsmenge und Feuchte wird eine Einrichtung 16 zur vollständigen Trocknung der angesaugten Luft verwendet. Diese Einrichtung 16 kann jedoch in manchen Fällen auch weggelassen werden, und zwar insbesondere dann, wenn bei der Gewinnung der Trocknungsverlaufskurven auf den Temperatur-und/oder Feuchteeinfluß verzichtet werden kann.

Bei der oben anhand der Fig. 1 bis 4 sowie anhand des Diagrammes gemäß Fig. 5 erläuterten Aufführungsform und Funktion der erfindungsgemäßen Vorrichtung wird der zeitliche Trocknungsverlauf einer feuchten Warenprobe insbesondere durch die Art der Trocknungsluftzuführung ermittelt, d. h. die Trocknungsluft wird über das steuerbare Ventil 25 mit definierter Temperatur, Strömungsmenge und Feuchte und gegebenenfalls auch mit der Möglichkeit einer Geschwindigkeitsvariation in den nach Art von Lochblenden wirkenden Lochscheiben 10 und 11 der Warenprobe 2 zugeführt.Diese Art der Ermittlung des zeitlichen Trocknungsverlaufes kann jedoch noch weiter verfeinert bzw.verbessert werden, um bestimmte Wärmeübergangskoeffizienten noch besser den jeweiligen Gegebenheiten von Warenproben anpassen zu können. Dies läßt sich -wie nachfolgend anhand der Fig. 6 und 7 erläutert wird -auf äußerst günstige Weise dadurch erreichen, daß die Ober-und Unterdüsen 8, 9 in ihrem vertikalen Abstand zur Warenprobe 2 in vertikaler Richtung (vgl. Doppelpfeile 29) synchron und gegensinnig verstellbar gehaltert sind.

Die Oberdüsen 8 und die Unterdüsen 9 mitsamt ihren zugehörigen Teilleistungen 14a bzw. 14b für die Luftzuführung sind zum vorgenannten Zweck beispielsweise an Halterungsplatten 30 bzw. 31 gehaltert, die ihrerseits über Gewindehülsen 32 bzw. 33 von mehreren gemeinsamen Gewindespindeln 34 getragen werden, die in Gehäuselagern 35 bzw. 36 oben und unten drehbar gelagert sind.

Diese als Verstellspindeln wirkende Gewindespindeln 34 weisen an ihren oberen und unteren Enden gegenläufige Gewindeabschnitte 34a bzw. 34b auf. Darüber hinaus können diese Gewindespindeln 34 synchron, d. h. alle gleichzeitig und mit derselben Drehgeschwindigkeit angetrieben werden, wozu beispielsweise -wie insbesondere in Fig. 6 angedeutet -diesen Gewindespindeln 34 ein gemeinsamer Kettentrieb 37 mit Antriebsmotor 37' zugeordnet sein kann.

Durch diese Art der Halterung und Auf-und Abbewegbarkeit können die Ober-und Unterdüsen 8, 9 in ihren vertikalen Abständen gegenüber der Warenprobe 2 synchron und gegensinnig zueinander verstellt werden, wie es in den Fig. 6 und 7 durch die Doppelpfeile 29 sowie durch die strichpunktierten Stellungen 8' bzw. 9' angedeutet ist.

Fig. 7 zeigt darüber hinaus noch eine Möglichkeit, wie in den die Trocknungsluftströme zu den Ober-und Unterdüsen 8, 9 führenden Teilleitungen 14a bzw. 14b flexible Leitungsabschnitte eingebaut sein können, um den Auf-und Abbewegungen der Ober-und Unterdüsen 8, 9 Rechnung zu tragen. Zu diesem Zweck können in die Teilleitungen 14a und 14b, insbesondere in deren senkrechten Abschnitten, elastische Schlauchbälge (beispielsweise Metallbälge) 38 an sich bekannte Ausführung angeordnet sein, die ein Verlängern und Verkürzen der Teilleitungen 14a und 14b in den genannten Abschnitten gestatten.

Wie bereits weiter oben bei den Erläuterungen zu den Fig. 1 bis 3 angedeutet worden ist, ist es zweckmäßig, den Nadelring 3 mittels einer Schublade 28 zwischen die Ober-und Unterdüsen 8, 9 einzuschieben und lose auf einen zum beweglichen Teil der Waage 6' gehörigen mehrarmigen Bügel 6 abzulegen. Dies läßt sich ebenfalls in den Fig. 6 und 7 erkennen.

Die Schublade 28 ist dabei in einer Gehäuseführung 40 sowie mittels Rollen 41 derart geführt, daß sie aus der in Fig. 7 strichpunktiert dargestellten Auszugsstellung 28', in der sie aus dem Vorrichtungsgehäuse 42 herausgezogen ist, in ihre Einschubstellung innerhalb des Gehäuses 42 einschiebbar ist, in der ein in der Auszugsstellung der Schublade 28 lose auf etwa aufrecht stehende Ablagestützen 43 aufgelegter Nadelring 3 genau in seine Betriebsstellung gegenüber dem Bügel und zwischen den Ober und Unterdüsen 8, 9 eingeschoben ist. Wenn die Schublade 28 und damit der Nadelring 3 mit der Warenprobe 2 die zuvor erwähnte Einschubstellung erreicht haben, kann kann die Schublade 28 ebenfalls mit Hilfe eines Spindeltriebes 44 abgesenkt werden, so daß der bis dahin lose von den Ablagestützen 43 getragene Nadelring 3 auf die unteren Enden 6a, 6b des mehrarmigen Bügels 6 der elektronischen Waage 6' lose abgelegt wird. Der Spindeltrieb 44 kann ebenfalls synchron über einen Kettentrieb, wie er bei 45 angedeutet ist, betrieben werden. Wie sich aus den Fig. 6 und 7 erkennen läßt, kann die Schublade 28 meh rere etwa in Umfangsrichtung des Nadelringes 3 verteilte Ablagestützen 43 enthalten. In der Einschubstellung ist die Schublade 28 dann in vertikaler Richtung (Doppelpfeil 46) aus der Verschiebestellung, in der sich der Nadelring 3 auf den oberen Enden der Ablagestützen 43 lose abstützt, in eine Wartestellung absenkbar, in der der Nadelring 3 durch den mehrarmigen Bügel 6 der Waage 6' von den Ablagestützen 43 abgehoben ist.

## Ansprüche

1. Vorrichtung zur Ermittlung des zeitlichen Trocknungsverlaufes einer feuchten Warenprobe - (2), enthaltend
a) eine Einrichtung zur Erzeugung eines Trocknungsluftstromes definierter Temperatur, Strömungsmenge und Feuchtigkeit,
b) eine Halterungseinrichtung (3) zur Aufnahme der Warenprobe während des Trocknungsvorganges,
c) ein Düsensystem (1) zur Zuführung des Luftstromes zu der von der Halterungseinrichtung getragenen Warenprobe,
d) eine Waage zur Wägung der Warenprobe während des Trocknungsvorganges,
gekennzeichnet durch folgende Merkmale:
e) die Halterungseinrichtung (3) ist während des Trocknungsvorganges ständig mit dem beweglichen Teil (6) der Waage verbunden,
f) es ist ein die Zuführung des Luftstromes im Takt der Wägung unterbrechendes, steuerbares Ventil - (25) vorgesehen.

2. Vorrichtung nach Anspruch 1, dadurch gekennzeichnet, daß die Waage zur wiederholten Wägung ausgeführt ist.

3. Vorrichtung nach Anspruch 1, dadurch gekennzeichnet, daß die Waage zur kontinuierlichen Wägung ausgeführt ist.

4. Vorrichtung nach Anspruch 1, bei der das Düsensystem (1) Ober-und Unterdüsen (8, 9) enthält, zwischen denen die Halterungseinrichtung (3) für die kreisförmige Warenprobe (2) angeordnet ist, dadurch gekennzeichnet, daß die Halterungseinrichtung durch einen Nadelring (3) gebildet wird, der symmetrisch zwischen den Ober-und Unterdüsen (8, 9) angeordnet ist.

5. Vorrichtung nach Anspruch 4, gekennzeichnet durch folgende Merkmale:
a) der Nadelring (3) besteht aus einem ringförmigen Nadelträger (4) und einer Anzahl von Nadeln (5), die am Innenrand (4a) des Nadelträgers in radialer Richtung nach innen gerichtet sind und in einer nach oben weisenden Spitze (5a) ausmünden;
b) der Innendurchmesser ($D_i$) des Nadelträgers (4) ist größer als der Außendurchmesser ($D_a$) des Düsensystemes (1).

6. Vorrichtung nach Anspruch 5, dadurch gekennzeichnet, daß der Querschnitt des Nadelträgers (4) stromlinienförmig gestaltet ist, wobei das verjüngte Ende nach außen weist.

7. Vorrichtung nach Anspruch 1, dadurch gekennzeichnet, daß das steuerbare Ventil (25) durch ein Dreiwegeventil gebildet wird.

8. Vorrichtung nach Anspruch 1, dadurch gekennzeichnet, daß die Einrichtung zur Erzeugung eines Trocknungsluftstromes definierter Temperatur, Strömungsmenge und Feuchtigkeit folgende Bauteile enthält:
a) ein Gebläse (17),
b) einen Wärmetauscher (18),
c) eine Befeuchtungskammer (19) mit Tropfenabscheider (20),
d) einen über ein Dampfmengenregelventil (22) an die Befeuchtungskammer (19) angeschlossenen Dampferzeuger (21).

9. Vorrichtung nach Anspruch 8, dadurch gekennzeichnet, daß die Einrichtung zur Erzeugung des Trocknungsluftstromes ferner eine Einrichtung (16) zur vollständigen Trocknung der Luft enthält.

10. Vorrichtung nach Anspruch 4, dadurch gekennzeichnet, daß die Ober-und Unterdüsen (8, 9) je eine kreisförmige Lochscheibe (10, 11) und ein zur Vergleichmäßigung der Luftströmung über den ganzen Querschnitt dienendes vorgeschaltetes Element (12, 13) aufweisen.

11. Vorrichtung nach Anspruch 10, dadurch gekennzeichnet, daß die Ober-und Unterdüsen (8, 9) in ihren Abständen zur Warenprobe (2) in vertikaler Richtung synchron und gegensinnig verstellbar sind.

12. Vorrichtung nach Anspruch 11, dadurch gekennzeichnet, daß die Ober-und Unterdüsen (8, 9) über Halterungen (30, 31) von mehreren gemeinsamen Verstellspindeln (34) auf-und abbewegbar getragen werden, die für die Ober-und Unterdüsen gegenläufige Gewindeabschnitte (34a, 34b) aufweisen und synchron antreibbar sind.

13. Vorrichtung nach Anspruch 11, dadurch gekennzeichnet, daß in den die Trocknungsluftströme zu den Ober-und Unterdüsen (8, 9) führenden Leitungen (14a, 14b) flexible Leitungsabschnitte, insbesondere elastische Schlauchbälge (38) angeordnet sind.

14. Vorrichtung nach Anspruch 4, dadurch gekennzeichnet, daß der Nadelring (3) mittels einer Schublade (28) zwischen die Ober-und Unterdüsen (8, 9) einschiebbar und lose auf einen zum beweglichen Teil der Waage gehörenden, mehrarmigen Bügel (6) ablegbar ist.

15. Vorrichtung nach Anspruch 14, dadurch gekennzeichnet, daß die Schublade (28) in Umfangsrichtung des Nadelringes (3) verteilt mehrere etwa aufrecht stehende Ablagestützen (43) für den Nadelring aufweist und in vertikaler Richtung aus einer Verschiebestellung, in der sich der Nadelring auf den oberen Ende der Ablagestützen lose abstützt, in eine Wartestellung absenkbar ist, in der der Nadelring durch den mehrarmigen Bügel (6) der Waage von den Ablagestützen abgehoben ist.

FIG. 1

FIG. 2

0 233 994

FIG. 3

FIG. 4

FIG.5

0 233 994

FIG.6

FIG. 7

0 233 994

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE-C- 810 442 (DREYER)<br>* Seite 1, Zeilen 27-31; Seite 2, Zeilen 70-74 * | 1 | G 01 N 5/04 |
| A | * Seite 2, Zeilen 75-77 *<br>--- | 3 | |
| Y | GB-A-1 153 771 (WOOL INDUSTRIES)<br>* Seite 1, Zeilen 88,89; Seite 3, Zeilen 32-39; Figur 3, Nr. 9 * | 1 | |
| A | * Seite 3, Zeilen 25-42; Figur 3 *<br>--- | 7,8 | |
| A | DE-U-8 217 478 (A. GRONERT)<br><br>* Figur 1,3a,b *<br>--- | 1,11, 14 | **RECHERCHIERTE SACHGEBIETE (Int. Cl.4)**<br><br>G 01 N |
| A | DE-A-2 432 258 (TEXTILFORSCHUNGSANSTALT KREFELD)<br>* Seite 5, Zeile 10; Seite 7, Zeile 19; Seite 9, Zeilen 19,20; Seite 12, Zeilen 10-13 *<br>--- | 4,14, 12 | |
| A | DE-A-2 526 510 (CGEE ALSTHOM)<br>* Seite 2, Zeilen 22-24 *<br>--- -/- | 10 | |

Der vorliegende Recherchenbericht wurde für alle Patentansprüche erstellt.

| Recherchenort<br>DEN HAAG | Abschlußdatum der Recherche<br>20-03-1987 | Prüfer<br>KLEIKAMP B.M.H.H. |
|---|---|---|

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | SOVIET INVENTIONS ILLUSTRATED, week 84/04, 7. Marz 1984, Zusammenfassung Nr. N84-017290, S3-E12, Derwent Publications Ltd, London, GB; & SU-A-1 006 975 (AS UKR THERMOPHYS) 26.12.1980 | | |
| | ----- | | |
| | | | **RECHERCHIERTE SACHGEBIETE (Int. Cl.4)** |

Der vorliegende Recherchenbericht wurde für alle Patentansprüche erstellt.

| Recherchenort DEN HAAG | Abschlußdatum der Recherche 20-03-1987 | Prufer KLEIKAMP B.M.H.H. |
|---|---|---|